**Europäisches Patentamt**

**European Patent Office**

**Office européen des brevets**

(19)

(11) Numéro de publication: **0 133 173**
**B1**

(12) # FASCICULE DE BREVET EUROPEEN

(45) Date de publication du fascicule du brevet:
**19.11.87**

(51) Int. Cl.⁴: **G 21 C 7/10,** F 16 B 21/16,
F 16 L 55/12

(21) Numéro de dépôt: **84870081.1**

(22) Date de dépôt: **20.06.84**

(54) **Dispositif d'accrochage pour bouchon d'étranglement démontable.**

(30) Priorité: **21.06.83 EP 83200916**

(43) Date de publication de la demande:
**13.02.85 Bulletin 85/7**

(45) Mention de la délivrance du brevet:
**19.11.87 Bulletin 87/47**

(84) Etats contractants désignés:
**AT BE CH DE FR GB IT LI LU NL SE**

(73) Titulaire: **ATELIERS DE CONSTRUCTIONS
ELECTRIQUES DE CHARLEROI (ACEC) Société
Anonyme, Avenue Lloyd George 7, B-1050 Bruxelles
(BE)**

(72) Inventeur: **Fabris, Mirko, 5, Rue de l'Argayon,
B-1400 Nivelles (BE)**

(56) Documents cités:
BE - A - 641 085
FR - A - 2 452 046
FR - A - 2 506 061
GB - A - 1 084 319
US - A - 1 830 817
US - A - 3 994 775

REVUE GENERALE NUCLEAIRE, no. 5,
septembre-octobre 1982, pages 443-448, Paris, FR; R.
ASSEDO et al.: "Conséquences du suivi du réseau pour
les composants mécaniques de la chaudière"

## Description

L'invention concerne un dispositif d'accrochage pour un ensemble de guidage des barres de contrôle d'un réacteur de centrale nucléaire.

Le réglage de la puissance d'une centrale nucléaire s'obtient en variant l'enfoncement des barres de contrôle dans le coeur du réacteur. Pour réaliser ce déplacement vertical, chaque barre de contrôle est montée en bout d'une tige d'actionnement pour former un ensemble coulissant à l'intérieur d'un tube-guide.

Chaque tube-guide est nanti de plaques-entretoises, régulièrement espacées sur tout la hauteur du tube guide, et conformées pour maintenir à distance constante les barres multiples, disposées en grappe, formant la barre de contrôle.

Les tubes-guides sont accrochés à une plaque-support recouvrant le coeur du réacteur et à travers laquelle les échanges de fluides sont strictement limités. Pour maintenir les échanges de fluides à des valeurs acceptables, la partie supérieure de chaque tube-guide est nantie d'un bouchon d'étranglement à travers lequel coulisse la tige d'actionnement. Ces bouchons d'étranglement doivent être démontables avec un outillage travaillant sous eau. Chaque bouchon d'étranglement est centré sur la plaque-entretoise supérieure du tube-guide et présente un rebord périphérique pour y prendre appui. Il est maintenu en place par un dispositif d'accrochage constitué d'un jeu de quatre tiges flexibles régulièrement réparties autour du bouchon d'étranglement et disposées de manière que la tête de chaque tige prenne appui sur le rebord périphérique du bouchon d'étranglement. Ce dispositif d'accrochage maintient sous tension mécanique permanente les tiges flexibles qui le compose et peut se dégrader progressivement sous l'action du phénomène de corrosion sous tension en compromettant dangereusement le maintien du bouchon d'étranglement.

La présente invention a pour but de remédier à ces inconvénients. Un autre but de la présente invention est de s'adapter à la fois au gabarit des tubes-guides et à celui de l'outillage de démontage. Un autre but de la présente invention est de s'adapter à la hauteur disponible dans la partie supérieure du tube-guide en se présentant sous plusieurs variantes de réalisation. Les buts de la présente invention sont atteints par un dispositif d'accrochage pour un ensemble de guidage de barres de contrôle comportant un tube-guide pourvu des plaques entretoises espacées sur la hauteur du tube-guide et une barre de contrôle coulissant à l'intérieur du tube-guide, la partie supérieure du tube-guide étant pourvue d'un bouchon d'étranglement présentant une couronne, le dit bouchon d'étranglement étant centré sur la plaque entretoise supérieure du tube-guide et maintenu en place par des éléments d'encliquetage régulièrement répartis à la périphérie du bouchon d'étranglement, caractérisé en ce que les éléments d'encliquetage sont solidarisés au bouchon l'étranglement et sont maintenus en position encliquetée sous l'action d'un dispositif à ressort.

Dans un premier exemple de réalisation, le dispositif d'accrochage comprend quatre ressorts-cliquets en forme d'épingle de grande longueur.

D'autres exemples de réalisation comportent quatre cliquetis articulés, maintenus en position encliquetée par un dispositif à ressort.

Les figures suivantes montrent en détails chacune de ces réalisations.

La fig. 1 représente une vue d'ensemble du tube-guide, de la barre de contrôle et de la tige d'actionnement;

la fig. 2 représente un dispositif d'accrochage formé de ressorts cliquets;

la fig. 3 représente un dispositif d'accrochage formé de cliquets articulés poussés par un ressort hélicoïdal situé à la partie inférieure du bouchon d'étranglement;

la fig. 4 représente un dispositif d'accrochage formé de cliquets articulés poussés par un ressort hélicoïdal situé à la partie supérieure du bouchon d'étranglement.

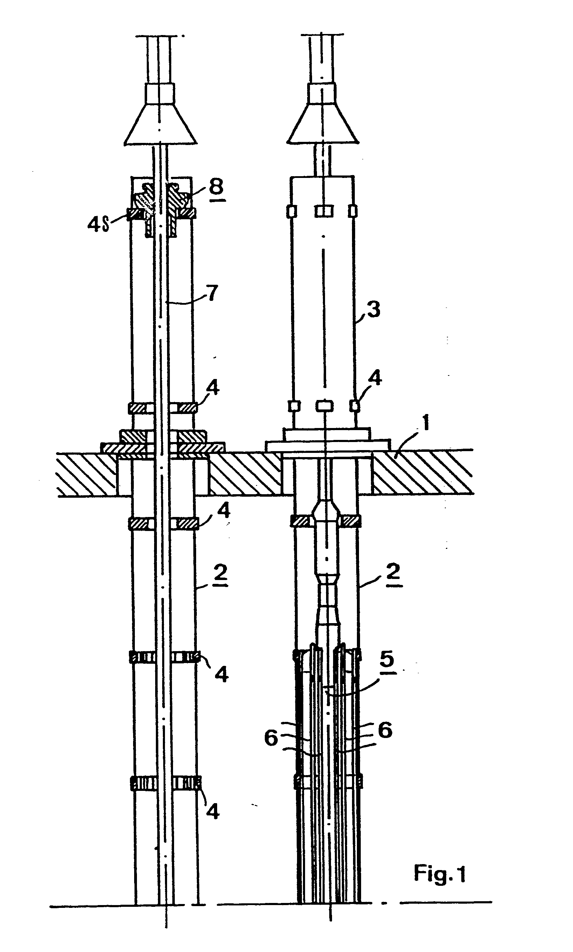

La fig. 1 montre une plaque-support 1 sur laquelle sont fixées des tubes-guides 2. Chaque tube-guide 2 comporte une partie supérieure 3 située au-dessus de la plaque support 1 et comprend des plaques entretoises 4 régulièrement espacées sur toute la hauteur du tube-guide 2. A l'intérieur du tube-guide 2 coulisse une barre de contrôle 5 formée de plusieurs barres 6 disposées en grappe et maintenues à distance constante par une configuration adéquate des plaques entretoises 4. La barre de contrôle 5 est montée en bout d'une tige d'actionnement 7 pour former un ensemble qui coulisse à l'intérieur du tube-guide 2. Pour réduire le débit de fuite, la plaque entretoise 4S est équipée d'un bouchon d'étranglement 8 pouvant se démonter sous eau à l'aide d'un outillage commandé à distance.

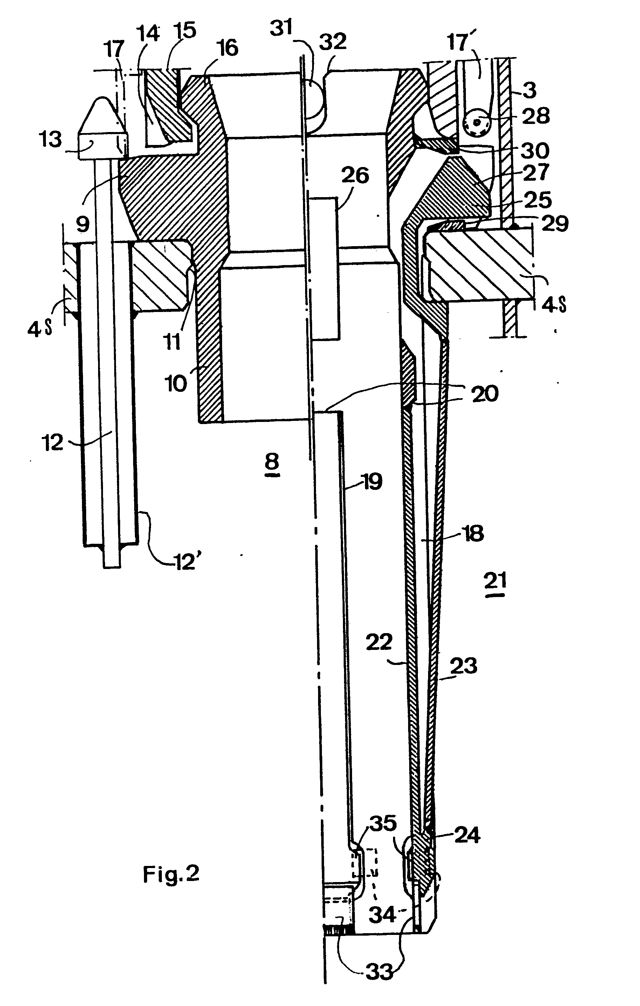

La partie gauche de la fig. 2 montre l'ancien dispositif d'accrochage tandis qu'à droite est représenté un premier exemple de réalisation. Ces deux demies figures ne sont pas des coupes faites selon un seul plan mais des coupes faites selon des plans orientés à 45 degrés l'un par rapport à l'autre.

Le bouchon d'étranglement 8 comporte une couronne 9 qui prend appui sur la plaque entretoise supérieure 4S et qui est solidaire d'une partie cylindrique 10 qui s'introduit dans un alésage 11 de la plaque entretoise supérieure 4S.

L'ancien dispositif d'accrochage de ce bouchon d'étranglement 8 se compose de quatre tiges flexibles 12 surmontées d'un embout 13 de plus grand diamètre dont la face inférieure, sensiblement horizontale, s'accroche à la face supérieure de la couronne 9 et dont la face supérieure est conformée pour faciliter l'action de l'outillage de démontage. Chacune de ces tiges 12 est solidarisée à la plaque entretoise supérieure 4S par l'intermédiaire d'un tube 12' de dimensions suffisantes pour donner à la tige 12 l'élasticité nécessaire à l'accrochage et au décrochage de l'embout 13 sur la couronne 9. Ces tiges flexibles 12 sont régulièrement réparties à la périphérie de la couronne 9 et sont disposées de manière que l'embout 13 vienne partiellement recouvrir la face supérieure de la couronne 9.

Pour enlever le bouchon d'étranglement 8, l'outillage utilisé comporte un cylindre 14 portant des doigts mobiles 15 pour s'accrocher à un rebord supérieur 16 solidarisé à la couronne 9. Sur le cylindre 14 coulisse un manchon 17 qui par son mouvement vers le bas écarte l'embout 13 pour libérer le bouchon d'étranglement 8.

Dans le nouveau dispositif d'accrochage, faisant l'objet de l'invention et repris sur la partie droite de la fig. 2, la partie cylindrique 10 du bouchon d'étranglement 8 a été prolongée d'une virole 18 dans laquelle on a découpé une première fenêtre 19 pour souder sur son bord supérieur 20 l'extrémité d'un ressort cliquet 21 en forme d'épingle. Ce ressort cliquet 21 est formé de deux branches 22 et 23 associées l'une à l'autre par une pièce d'angle 24. La branche la plus courte 22 est solidarisée au bord supérieur 20 de la fenêtre 19 de manière à occuper une position sensiblement vertical tandis que la branche la plus longue 23 a son extrémité libre conformée en un cliquet 25 s'aggripant de part et d'autre de la plaque entretoise supérieure 4S.

Une seconde fenêtre 26 permet au cliquet 25 de se dégager complètement de la plaque entretoise supérieure 4S lors de l'opération de démontage.

Le cliquet 25 a une face inclinée 27 permettant à un galet 28, solidarisé au manchon 17' de l'outillage de démontage, de repousser le cliquet 25 pour dégager le bouchon d'étranglement 8. Pour réduire le débit de fuite, chaque cliquet 25 s'insère entre une première plaquette 29 solidarisée à l'entretoise supérieure 4S et une deuxième plaquette 30 solidarisée à la couronne 9. De la sorte, le débit de fuite est pratiquement réduit au seul jeu existant entre le diamètre de la tige d'actionnement 7 et l'alésage du bouchon d'étranglement 8.

Le fait que le cliquet 25 s'appuye sur la plaquette 29 renforce considérablement l'effort d'accrochage du bouchon d'étranglement sur l'entretoise supérieure 4S du tube-guide.

Le nouveau dispositif d'accrochage comporte quatre ressorts cliquets 21 solidarisés au bouchon d'étranglement 8 et régulièrement répartis sur sa périphérie.

Pour que les quatre galets 28 de l'outillage de démontage se présentent au droit des faces inclinées 27 des quatre cliquets 25, une broche de repérage 31 solidaire de l'outillage de démontage doit s'engager dans une fente 32 faite dans le rebord supérieur 16 du bouchon d'étranglement 8.

Pour limiter la course de chaque pièce d'angle 24, une pièce d'arrêt 33 a été solidarisée à la paroi interne de la virole 18 et deux autres limiteurs 34, la fig. 2 n'en montre qu'un seul, ont été fixés sur la paroi externe de la virole 18 pour servir de butée à deux petits ailerons 35, la fig. 2 n'en montre qu'un seul, fixés latéralement à la pièce d'angle 24.

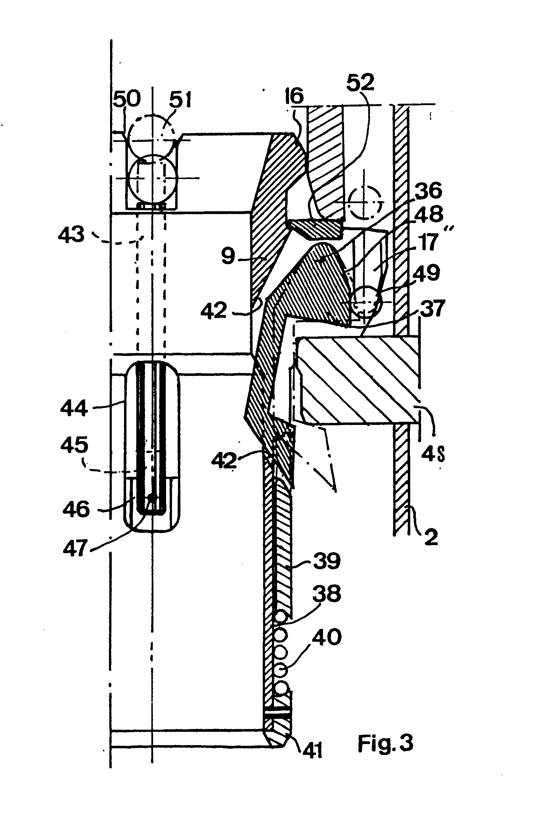

La fig. 3 présente un autre exemple de dispositif d'accrochage du bouchon d'étranglement 8 utilisé lorsque l'espace disponible à la partie supérieure 3 du tube guide 2, montré en fig. 1, est plus réduit. Dans cet autre exemple de réalisation, la couronne 9 est nantie de quatre axes 36 régulièrement répartis sur une même circonférence et disposées tangentiellement à celle-ci de manière que sur chacun de ces axes 36 s'articule un cliquet 37 suivant un mouvement radial pour s'aggriper de part et d'autre de la plaque entretoise supérieure 4S. L'axe 36 est situé sur la partie haute du cliquet 37 pour permettre à celui-ci de prendre la position encliquetée sous l'action de son propre poids.

Dans cet exemple de réalisation la partie cylindrique 12 du bouchon d'étranglement 8 a été prolongée d'une virole 38 sur laquelle coulisse un manchon poussoir 39 qui est repoussé vers le haut à l'aide d'un ressort hélicoïdal 40, co-axial à la virole 38, prenant appui sur une butée 41 solidarisée à l'extrémité inférieure de la virole 38. La fonction du manchon poussoir 39 est de maintenir les quatre cliquets articulés 37 en position encliquetée.

Des fenêtres 42, au nombre de quatre, ont été découpées pour permettre aux quatre cliquets articulés 37 de s'écarter suffisamment de la plaque entretoise supérieure 4S pour dégager le bouchon d'étranglement 8.

Deux tiges 43, parallèles à l'axe du bouchon d'étranglement 8 et diamètralement opposées, coulissent librement dans la couronne 9 et débouchent vers le haut à travers le rebord supérieur 16 et vers le bas sur deux fenêtres 44, la fig. 3 n'en montre qu'une, faites dans la partie cylindrique 10 et la virole 38 qui la prolonge.

Chacune de ces tiges 43 porte une fente 45 à sa partie inférieure pour enfourcher une partie amincie 46 du manchon poussoir 39. Un rivet 47 passant de part en part de la partie inférieure de la tige portant la fente 45 et de la partie amincie 46 du manchon poussoir 39 assure la liaison permanente entre chaque tige 43 et le manchon poussoir 39. Ces tiges servent à repousser le manchon poussoir 39 vers le bas pour déverrouiller les cliquets articulés 37.

Chaque cliquet articulé 37 a une face inclinée 48 permettant à un galet 49 solidarisé au manchon 17'' de l'outillage de démontage, de repousser le cliquet articulé 37 pour le dégager complètement de la plaque entretoise supérieure 4S.

Pour libérer le bouchon d'étranglement 8, il faut que l'outillage de démontage déverrouille d'abord les cliquets articulés 37 avant de les dégager de la plaque entretoise supérieure 4S. Pour exécuter les opérations, deux encoches 50, faites dans le rebord supérieur 16 aux endroits précis où débouchent les deux tiges 43, permettent à deux broches de repérage 51 de s'y engager pour présenter les quatre galets 49 de l'outillage de démontage au droit des faces inclinées 48 des galets articulés 37. Lorsque les broches de repérage 51, s'engagent plus en profondeur dans les encoches 50 elles repoussent vers le bas les tiges 43 et le manchon poussoir 39 pour déverrouiller les cliquets articulés 37.

Lorsqu'ensuite le manchon 17" portant les galets 49 coulisse vers le bas, les quatre cliquets articulés sont écartés pour libérer le bouchon d'étranglement 8.

Pour réduire le débit de fuite, une plaquette 52 a été solidarisée à la couronne 9 au droit des quatre fenêtres 42.

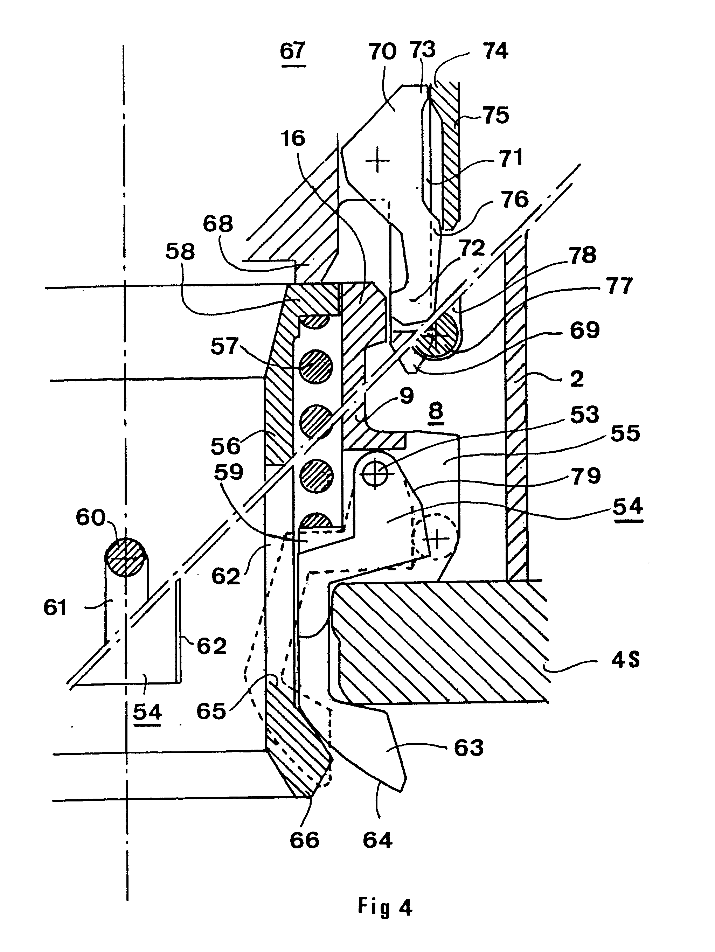

La fig. 4 montre un mode de réalisation préféré par son encombrement minimum et par le maintien du ressort de compression dans une chambre fermée pour éviter toute dispersion de débris en cas de rupture du ressort.

La fig. 4 représente deux coupes séparées par un double trait d'axe et décalées l'une de l'autre de 45°.

Le bouchon d'étranglement 8 se compose d'une couronne 9 nantie de quatre axes 53 disposés tangentiellement à une même circonférence, à 90° l'un de l'autre. Sur chaque axe 53 s'articule un cliquet 54 pour agripper la plaque entretoise supérieure 4S. L'axe 53 est situé à la partie supérieure du cliquet 54 pour permettre à celui-ci de prendre la position encliquetée sous l'action de son propre poids. Pour chaque cliquet 54, la couronne 9 est entaillée d'une fenêtre 55 permettant de libre déplacement du cliquet 54. Dans cet exemple de réalisation, un manchon 56 coulisse à l'intérieur de la couronne 9 et présente dans sa partie centrale un diamètre extérieur plus petit pour loger un ressort hélicoïdal 57 prenant appui d'une part contre un épaulement supérieur 58 du manchon 56 et d'autre part sur un épaulement inférieur 59 de la partie interne de la couronne 9. La course du ressort hélicoïdal 57 est limitée et l'orientation correcte du manchon 56 par rapport à la couronne 9 est assurée par deux broches 60 diamètralement opposées et solidarisées à la couronne 9 qui se déplace chacune dans une boutonnière verticale 61 du manchon 56. Le manchon 56 présente également une fenêtre 62 vis-à-vis de chaque fenêtre 55 de la couronne 9 pour permettre l'escamotage complet du cliquet 54. Le cliquet 54, en forme de crochet, présente au dos de son extrémité 63 une surface courbe 64 qui collabore avec une autre surface courbe 65 de la partie inférieure 66 du manchon 56 pour maintenir le cliquet 54 en position encliquetée lorsque, sous l'action du ressort 57, l'épaulement supérieur 58 du manchon 56 et l'épaulement inférieur de la couronne 9 sont écartés au maximum. D'autre part l'extrémité 63 du cliquet 54 s'accroche à la plaque entretoise supérieure 4S sous un angle tel qu'il y a autoblocage du cliquet 54 sur la plaque entretoise supérieure 4S, même en cas de rupture du ressort 57.

Pour enlever ou placer le bouchon d'étranglement 8 il faut mettre le cliquet 54 en position dégagée. Un outillage 67, prévu à cet effet, comporte à sa partie inférieure une couronne 68 prenant appui sur l'épaulement supérieur 58 du manchon 56 de manière à comprimer le ressort 56. L'outillage 67 comporte également une seconde couronne, dite couronne de centrage 69, concentrique à la première couronne 68 mais d'un diamètre plus grand et située à l'avant pour servir de guide à l'outillage 67. Cette couronne de centrage 69 porte des doigts mobiles 70, libres de se déplacer radialement dans des fenêtres 71 ménagées dans la couronne de centrage 69. Chaque doigt mobile 70 a son extrémité 72 conformée pour s'accrocher au rebord supérieur 16 du bouchon d'étranglement 8. La position dégagée du doigt mobile 70 est obtenue par la collaboration d'un bossage 73 situé à la partie externe supérieure du doigt mobile 70 avec un bossage 74 situé à la partie interne d'un coulisseau 75 se déplaçant en périphérie de l'outillage 67.

La fig. 4 représente l'outillage 67 au moment où la couronne intérieure 68 vient en contact avec l'épaulement supérieur 58 du manchon 56. Lorsque l'outillage 67 descend, il pousse le manchon 56 vers le bas et comprime le ressort 57. Dès que l'extrémité 72 du doigt mobile 70 a dépassé le rebord supérieur 16, le coulisseau 75 peut coulisser vers le bas, par rapport à l'outillage 67, pour que le bossage 74 vienne en contact avec un bossage 76 situé dans la partie médiane extérieure du doigt mobile 70 pour repousser celui-ci vers le centre et agripper le bouchon d'étranglement 8 par son rebord supérieur 16. Parallèlement, un galet 77, monté au bout d'un doigt de déverrouillage 78, entre en contact avec une surface inclinée 79 du cliquet 54 pour repousser progressivement celui-ci vers le centre et le dégager de la plaque entretoise supérieure 4S. Ce mouvement est rendu possible par la séparation des surfaces courbes 64 et 65 appartenant respectivement à l'extrémité du cliquet 54 et à l'extrémité inférieure du manchon 56, suite à la poussée vers le bas de l'outillage 67 sur le manchon 56.

La position dégagée du cliquet 54 est représentée en pointillés sur la fig. 3. Cette position est acquise lorsque la couronne 68 de l'outillage 67 a comprimé le ressort 57 et dégagé l'extrémité 63 du cliquet 54 de la partie inférieure du manchon 56 et que le galet 77 a repoussé le cliquet 54 vers l'intérieur pour le dégager complètement de la plaque entretoise supérieure 4S. A ce moment l'extrémité 72 du doigt mobile 70 est engagée dans le rebord supérieur 16 du bouchon d'étranglement 8 et celui-ci peut être enlevé.

**Revendications**

1. Dispositif d'accrochage pour un ensemble de guidage de barres de contrôle comportant un tube-guide (2) pour des plaques entretoises (4) espacées sur la hauteur du tube-guide et une barre de contrôle (5) coulissant à l'intérieur du tube-guide, la partie supérieure (3) du tube-guide étant pourvue d'un bouchon d'étranglement (8) présentant une couronne (9), le dit bouchon d'étranglement (8) étant centré sur la plaque entretoise supérieure (4S) du tube-guide et maintenu en place par des éléments d'encliquetage régulièrement répartis à la périphérie du bouchon d'étranglement, caractérisé en ce que les éléments d'encliquetage (25; 37; 54) sont solidarisés au bouchon d'étranglement (8) et sont maintenus en position encliquetée sous l'action d'un dispositif à ressort (21; 40; 57).

2. Dispositif d'accrochage selon la revendication 1, caractérisé en ce que chaque élément d'encliquetage (25; 37; 54) a une surface inclinée (27; 48; 79) permettant à un galet (28; 49; 77), solidaire d'un outillage de démontage et se déplaçant parallèlement à l'axe du tube-guide (2), de dégager l'élément d'encliquetage (25; 37; 54) de la plaque entretoise supérieure (4S).

3. Dispositif d'accrochage selon une des revendications précédentes, caractérisé en ce que le dispositif à ressort est un ressort de grande longueur (21) solidarisé d'une part à l'élément d'encliquetage (25) et d'autre part au bouchon d'étranglement (8).

4. Dispositif d'accrochage selon les revendications 1 et 2, caractérisé en ce que l'élément d'encliquetage est constitué l'un cliquet (37) oscillant autour d'un axe (36) situé à la partie haute du cliquet (37) pour permettre à celui-ci d'occuper une position encliquetée sous l'action de son propre poids et en ce que le dispositif ressort est constitué d'un ressort hélicoïdal (40) qui, en prenant appui sur une butée (41), solidaire d'une virole (38) fixée co-axialement à la partie inférieure du bouchon d'étranglement (8) repousse un manchon poussoir (39) qui, en coulissant sur la virole (38), maintient le cliquet (37) en position encliquetée.

5. Dispositif d'accrochage selon les revendications 1 et 2, caractérisé en ce que l'élément d'encliquetage est constitué d'un cliquet (54) articulé autour d'un axe (53), disposé tangentiellement à une circonférence concentrique de l'axe du tube guide (2), situé à la partie supérieure du cliquet (54) pour permettre à celui-ci d'occuper une position encliquetée sous l'action de son propre poids et en ce que le dispositif ressort est constitué d'un ressort hélicoïdal (57) prenant appui d'une part contre un épaulement supérieur (58) d'un manchon (56) coulissant à l'intérieur de la couronne (9) et d'autre part sur un épaulement inférieur (59) de la partie interne de la couronne (9) et maintient le cliquet (54) en position encliquetée par la coopération d'une partie inférieure (66) du manchon (56) et d'une extrémité (63) du cliquet (54).

6. Dispositif d'accrochage selon la revendication 3, caractérisé en ce que le ressort de grande longueur (21) est formé de deux branches (22, 23) d'inégale longueur, solidarisées entre elles par une pièce d'angle (24) dont le débattement est limité par des butées (33, 34) solidarisées au bouchon d'étranglement (8).

7. Dispositif d'accrochage selon la revendication 4, caractérisé en ce que sous l'action de l'outillage de démontage, des tiges coulissantes (43) repoussent le manchon poussoir (39) vers le bas pour déverrouiller les cliquets articulés (37).

8. Dispositif d'accrochage selon la revendication 4, caractérisé en ce que la face supérieure du bouchon d'étranglement (8) porte une encoche (32; 50) dans laquelle s'engage une ou plusieurs broches de repérage (31; 51) pour positionner convenablement les galets (28, 49) par rapport aux surfaces inclinées (27, 48) des éléments d'encliquetage (25, 37) et servir à repousser les tiges coulissantes (43).

9. Dispositif d'accrochage selon la revendication 5, caractérisé en ce que d'une part la partie inférieure (66) du manchon (56) présente une surface courbe (65) qui coopère avec une autre surface courbe (64) faite au dos de l'extrémité (63) du cliquet (54) et en ce que d'autre part l'extrémité (63) du cliquet (54) s'accroche à la plaque entretoise supérieure (4S) sous un angle tel qu'il y a autoblocage du cliquet (54) sur la plaque entretoise supérieure (4S).

10. Dispositif d'accrochage selon les revendications 5 et 9, caractérisé en ce que le manchon (56) coulissant à l'intérieur de la couronne (9) est limité dans sa course et orienté par rapport à la couronne (9) par des broches (60) collaborant avec des boutonnières (61).

## Patentansprüche

1. Verankerungsvorrichtung für eine Steuerstab-Führungseinheit aus einem Führungsrohr (2), das mit Abstandsplatten (4) versehen ist, die gleichmässig über die Höhe des Führungsrohres verteilt sind, und aus einem Steuerstab (5), der innerhalb des Führungsrohres gleitet, wobei der obere Teil (3) des Führungsrohres mit einem Drosselungsabschluss (8) versehen ist, der einen Kranz (9) aufweist, und der besagte Drosselungsabschluss (8) zentrisch zu der obersten Abstandsplatte (4S) des Führungsrohres angeordnet ist und durch Einrastelemente festgelegt wird, die gleichmässig über den Umfang des Drosselungsabschlusses verteilt sind, dadurch gekennzeichnet, dass die Einrastelemente (25; 37; 54) mit dem Drosselungsabschluss (8) verbunden sind und aufgrund der Wirkung einer Federvorrichtung (21; 40; 57) in der eingerasteten Position gehalten werden.

2. Verankerungsvorrichtung gemäss Anspruch 1, dadurch gekennzeichnet, dass jedes Einrastelement (25; 37; 54) eine geneigte Fläche (27; 48; 79) aufweist, die einer mit einem Demontagewerkzeug verbundenen Rolle (28; 49; 77), die parallel zu der Achse des Führungsrohres (2) verschoben wird, ermöglicht, das Einrastelement (25; 37; 54) aus der obersten Abstandsplatte (4S) auszurücken.

3. Verankerungsvorrichtung gemäss einem der vorhergehenden Ansprüche, dadurch gekennzeichnet, dass die Federvorrichtung aus einer Feder (21) von grosser Länge besteht, die einerseits mit dem Einrastelement (25) und andererseits mit dem Drosselungsabschluss (8) fest verbunden ist.

4. Verankerungsvorrichtung gemäss Anspruch 1 und 2, dadurch gekennzeichnet, dass das Einrastelement aus einer Sperrklinke (37) besteht, die um eine Achse (36) schwenkbar ist, wobei diese Achse (36) in dem oberen Teil der Sperrklinke (37) angeordnet ist, um dieser Sperrklinke (37) zu ermöglichen, aufgrund der Wirkung ihres eigenen Gewichts eine eingerastete Position einzunehmen; und dass die Federvorrichtung aus einer Schraubenfeder (40) besteht, die auf einem Anschlag (41) anliegt, der mit einem in dem unteren Teil des Drosselungsabschlusses (8) koaxial angeordneten Ring (38) fest verbunden ist, wobei diese Schraubenfeder (40) eine Schiebemuffe (39) zurückschiebt, die auf dem Ring (38) gleitet und dabei die Sperrklinke (37) in der eingerasteten Position hält.

5. Verankerungsvorrichtung gemäss Anspruch 1 und 2, dadurch gekennzeichnet, dass das Einrastelement aus einer um eine Achse (53) schwenkbaren Sperrklinke (54) besteht, wobei diese Achse (53) tangential zu einem zu der Achse des Führungsrohrs (2) konzentrischen Umfang angeordnet ist, und in dem oberen Teil der Sperrklinke (54) gelegen ist, um dieser Sperrklinke (54) zu ermöglichen, aufgrund der Wirkung ihres eigenen Gewichts eine eingerastete Position einzunehmen; und dass die Federvorrichtung aus einer Schraubenfeder (57) besteht, die einerseits auf einer oberen Schulter (58) einer innerhalb des Kranzes (9) gleitenden Muffe (56), und andererseits auf einer unteren Schulter (59) des inneren Teils des Kranzes (9) aufliegt, und die Sperrklinke (54) durch Zusammenwirken eines unteren Teils (66) der Muffe (56) und eines Endes (63) der Sperrklinke (54) in der eingerasteten Position hält.

6. Verankerungsvorrichtung gemäss Anspruch 3, dadurch gekennzeichnet, dass die Feder (21) von grosser Länge aus zwei Schenkeln (22, 23) von verschiedener Länge besteht, die durch ein Winkelstück (24) miteinander fest verbunden sind, dessen Auslenkung durch Anschläge (33, 34) begrenzt wird, die mit dem Drosselungsabschluss (8) fest verbunden sind.

7. Verankerungsvorrichtung gemäss Anspruch 4, dadurch gekennzeichnet, dass Gleitstäbe (43) aufgrund der Einwirkung des Demontagewerkzeugs die Schiebemuffe (39) nach unten zurückschieben, um die Gelenk-Sperrklinken (37) zu entriegeln.

8. Verankerungsvorrichtung gemäss Anspruch 4, dadurch gekennzeichnet, dass die obere Fläche des Drosselungsabschlusses (8) einen Einschnitt (32; 50) aufweist, in den ein oder mehrere Positionierungsdorne (31; 51) eingreifen, um die Rollen (28, 49) in geeigneter Weise bezüglich der geneigten Flächen (27, 48) der Einrastelemente (25, 37) zu positionieren, und um die Gleitstangen (43) zurückzuschieben.

9. Verankerungsvorrichtung gemäss Anspruch 5, dadurch gekennzeichnet, dass einerseits der untere Teil (66) der Muffe (56) eine gekrümmte Fläche (65) aufweist, die mit einer anderen gekrümmten Fläche (64) auf der Rückseite des Endes (63) der Sperrklinke (54) zusammenwirkt, und dass andererseits das Ende (63) der Sperrklinke (54) bei der obersten Abstandsplatte (4S) unter einem solchen Winkel eingehakt wird, dass sich die Sperrklinke (54) auf der obersten Abstandsplatte (4S) selbst blockiert.

10. Verankerungvorrichtung gemäss Anspruch 5 und 9, dadurch gekennzeichnet, dass die innerhalb des Kranzes (9) gleitende Muffe (56) einen begrenzten Hub aufweist, und bezüglich des Kranzes (9) durch Dorne (60) ausgerichtet wird, die mit Schlitzen (61) zusammenwirken.

**Claims**

1. Fixing arrangement for a control rod guide assembly comprising a guide tube (2) provided with spacer plates (4) spaced over the height of the guide tube, and a control rod (5) sliding within the guide tube, the upper portion (3) of the guide tube being provided with a throttle closure (8) having an annulus (9), the said throttle closure (8) being centred on the upper spacer plate (4S) of the guide tube and held in place by latching elements uniformly distributed over the periphery of the throttle closure, characterized in that the latching elements (25; 37; 54) are securely connected to the throttle closure (8) and are held in the latched position by the action of a spring device (21; 40; 57).

2. Fixing arrangement according to claim 1, characterized in that each latching element (25; 37; 54) has an inclined surface (27; 48; 79) allowing a roller (28; 49; 77), integral with a demounting tool and moving parallel to the axis of the guide tube (2), to release the latching element (25; 37; 54) from the upper spacer plate (4S).

3. Fixing arrangement according to one of the preceding claims, characterized in that the spring device is a spring of great length (21) secured on the one hand to the latching element (25) and on the other hand to the throttle closure (8).

4. Fixing arrangement according to claims 1 and 2, characterized in that the latching element comprises a latch (37) pivotable about a pin (36) situated at the upper portion of the latch (37) for allowing the latter to occupy a latched position under the action of its own weight, and in that the spring device is constituted by a helical spring (40) which, bearing on an abutment (41) integral with a tubular element (38) fixed coaxially to the lower position of the throttle closure (8), repels a pusher sleeve (39) which, in sliding on the tubular element (38), holds the latch (37) in the latched position.

5. Fixing arrangement according to claims 1 and 2, characterized in that the latching element is constituted by a latch (54) pivotably movable about a pivot pin (53), arranged tangentially to a circumference concentric with the axis of the guide tube (2), situated at the upper portion of the latch (54) to allow the latter to occupy a latched position under the action of its own weight, and in that the spring device is constituted by a helical spring (57) bearing on the one hand against an upper shoulder (58) of a sleeve (56) slidable within the annulus (9) and on the other hand against a lower shoulder (59) of the inner portion of the annulus (9) and holds the latch (54) in the latched position by the co-operation of a lower portion (66) of the sleeve (56) and of one end (63) of the latch (54).

6. Fixing arrangement according to claim 3, characterized in that the spring of great length (21) is formed of two arms (22, 23) of unequal length secured to one another by an angle element (24) the movement of which is limited by abutments (33, 34) secured to the throttle closure (8).

7. Fixing arrangement according to claim 4, characterized in that, under the action of the demounting tool, sliding rods (43) repel the pusher sleeve (39) downwardly to unlock the pivoted latches (37).

8. Fixing arrangement according to claim 4, characterized in that the upper face of the throttle closure (8) has a notch (32; 50) in which engages one or more indicating or reference pins (31; 51) for positioning the rollers (28, 49) suitably relatively to the inclined surfaces (27, 48) of the latching elements (25, 37) and serving to repel the sliding rods (43).

9. Fixing arrangement according to claim 5, characterized in that on the one hand the lower portion (66) of the sleeve (56) has a curved surface (65) which co-operates with another curved surface (64) formed on the back of the end (63) of the latch (54), and in that on the other hand the end (63) of the latch (54) engages on the upper spacer plate (4S) at an angle such that there is self-locking of the latch (54) on the upper spacer plate (4S).

10. Fixing arrangement according to claims 5 and 9, characterized in that the sleeve (56) sliding within the annulus (9) is limited in its travel and orientated relatively to the annulus (9) by pins (60) co-operating with slots (61).

Fig. 1

Fig.2

Fig. 3

0133173

Fig 4

15